# EUROPÄISCHE PATENTSCHRIFT

(11) **EP 3 838 652 B1**
(45) Veröffentlichungstag und Bekanntmachung des Hinweises auf die Patenterteilung: **06.09.2023**
(21) Anmeldenummer: 20214182.6
(22) Anmeldetag: 15.12.2020
(51) Int. Cl.: B60L 9/16, B60L 15/20, B61L 25/02

(54) **ANTRIEBSSYSTEM FÜR EIN FAHRZEUG, VERFAHREN ZUM BETREIBEN DES ANTRIEBSSYSTEMS, SOWIE FAHRZEUG MIT ANTRIEBSSYSTEM**
DRIVE SYSTEM FOR A VEHICLE, METHOD FOR OPERATING THE DRIVE SYSTEM, AND VEHICLE WITH DRIVE SYSTEM
SYSTÈME D'ENTRAÎNEMENT POUR UN VÉHICULE, PROCÉDÉ DE FONCTIONNEMENT D'ENTRAÎNEMENT AINSI QUE VÉHICULE POURVU D'UN SYSTÈME D'ENTRAÎNEMENT

(30) Priorität: 19.12.2019 DE 102019220169
(43) Veröffentlichungstag der Anmeldung: 23.06.2021
(73) Patentinhaber: Bombardier Transportation GmbH, 10785 Berlin (DE)
(72) Erfinder: Wirth, Christian, 8404 Winterthur (CH); Vogelsberger, Markus, 6152 Trins (AT)
(74) Vertreter: Patentanwälte Bressel und Partner mbB

(56) Entgegenhaltungen:
- US-A1- 2014 074 328
- US-A1- 2016 152 157
- US-A1- 2018 126 852

## Beschreibung

Die Erfindung betrifft ein Antriebssystem für ein Fahrzeug, insbesondere Schienenfahrzeug.

Außerdem betrifft die Erfindung ein Verfahren zum Betreiben des Antriebssystems eines Fahrzeugs.

Ferner betrifft die Erfindung ein Fahrzeug, insbesondere Schienenfahrzeug, mit erfindungsgemäßem Antriebssystem.

Drehgeberlose Antriebssysteme für Fahrzeuge sind aus der Literatur bekannt.

Unter drehgeberlos wird im Zusammenhang dieser Spezifikation das Fehlen einer Vorrichtung verstanden, welche die Rotorposition/-drehwinkel einer Traktionsmaschine oder den Drehwinkel eines Rades während der Bewegung des Fahrzeugs direkt messbar oder zumindest ableitbar macht.

Andere bekannte Bezeichnungen für Drehgeber sind Speedsensor, Drehzahlgeber, Impulsgeber, Signalgeber oder auch Tachogeber.

Beispielsweise beschreibt die Patentanmeldung JP2005176490 ein drehgeberloses Antriebssystem für Fahrzeuge.

Die Erfassung der Rotorposition der Traktionsmaschinen der Antriebe ist jedoch weiterhin für die Traktionsregelung, insbesondere bei vektorbasierten Regelungsverfahren, erforderlich.

Deshalb wurden Verfahren entwickelt, wie beispielsweise in der Patentanmeldung WO2012/004343 beschrieben, die es ermöglichen die Rotorposition anhand von Messung und Auswertung der Phasenströme und Phasenspannungen der Traktionsmaschine abzuleiten.

Hierfür ist es jedoch erforderlich die Traktionsmaschinen kontinuierlich mit Wechselgrö-βen zu beaufschlagen, um die Rotorposition ableitbar zu machen. Unter dem Begriff Wechselgröße wird in Zusammenhang dieser Spezifikation Wechselspannung und/oder Wechselstrom verstanden, so wie es in der Elektrotechnik üblich ist. Dies umfasst auch pulsförmige Wechselgrößen in Strom und/oder Spannung, sowie deren Harmonische.

Oft ist es bei Fahrzeugen erforderlich den Stillstand des Fahrzeugs zu überwachen, um bei einem Wegrollen des Fahrzeugs entsprechende Gegenmaßnahmen zu ergreifen, um das Fahrzeug am Wegrollen zu hindern.

Werden Antriebssysteme von Fahrzeugen drehgeberlos ausgebildet, sind folglich keine Drehgeber vorhanden.

Die Erfinder haben erkannt, dass falls das Antriebssystem des Fahrzeugs drehgeberlos ausgebildet ist, es sodann erforderlich ist die Traktionsmaschinen auch während des Fahrzeugstillstands mit Wechselgrößen zu beaufschlagen um aufgrund einer Veränderung der Rotorposition einer Traktionsmaschine auf eine Bewegung des Fahrzeugs zurückschießen zu können.

Unter Stillstand wird im Zuge dieser Spezifikation der Fahrzeugstillstand, der mechanische Stillstand einer Ausgangswelle einer Traktionsmaschine oder auch der mechanische Stillstand eines Rades verstanden.

Die Versorgung der Traktionsmaschinen mit Wechselgrößen wirkt sich besonders bei Schienenfahrzeugen nachteilig aus, da diese Fahrzeuge oft mit einer Vielzahl von Traktionsmaschinen ausgebildet sind, sodass für die Überwachung des Stillstands ein hoher Energieaufwand nötig ist.

US 2018/126852 A1 beschreibt eine Fahrzeugsteuerung, die die von einer Antriebseinheit zu erzeugende Leistung steuert. Die Drehgeschwindigkeit eines Antriebsmotors kann durch einen Resolver detektiert werden.

US 2014/074328 A1 beschreibt ein System zur Traktionssteuerung. Bei der Steuerung wird die aktuelle Fahrgeschwindigkeit berücksichtigt.

US 2016/152157 A1 beschreibt die Detektion der Fahrtrichtung eines elektrischen Fahrzeugs.

Der Erfindung liegt deshalb die Aufgabe zu Grunde ein Antriebssystem für ein Fahrzeug, ein Verfahren zum Betreiben des Antriebssystems, sowie Fahrzeug mit Antriebssystem zu schaffen, bei dem die Stillstandserkennung des Fahrzeugs ermöglicht wird, obwohl das Fahrzeug ein drehgeberloses Antriebssystem aufweist.

Weiterhin ist es eine Aufgabe der Erfindung den Energieverbrauch des Fahrzeugs während des Stillstands, insbesondere für die Überwachung des Fahrzeugstillstands, zu reduzieren.

Vielmehr wird der Energieverbrauch reduziert, ohne dabei die Zuverlässigkeit der Stillstandserkennung negativ zu beeinflussen.

Die beigefügten Patentansprüche definieren den Schutzumfang.

An dieser Stelle soll klarstellend angemerkt werden, dass eine Detektion einer Drehbewegung zumindest eines Rades des Fahrzeugs während des Stillstands so zu verstehen ist, dass der erwartete Zustand oder der Sollzustand der Stillstand ist. Die Detektion dient insbesondere dem Zweck eine Abweichung von diesem Zustand zu erkennen, nämlich zum Beispiel eine Drehbewegung zumindest eines Antriebsrades, obwohl dies nicht gewünscht ist oder nicht erwartet ist. Der im Folgenden verwendete Begriff "Stillstands-Zustand" oder "Zustand des Stillstands" ist der Zustand, in dem der Stillstand erwartet und/oder gewünscht ist.

Diese Aufgabe wird erfindungsgemäß mit einem Antriebssystem für ein Fahrzeug nach Anspruch 1 gelöst. Weiterhin wird die Aufgabe mit einem Verfahren zum Betreiben des Antriebssystems nach Anspruch 5 und einem Fahrzeug mit Antriebssystem nach Anspruch 9 gelöst.

Vorteilhafte Ausgestaltungen der Erfindung sind in den Unteransprüchen enthalten.

Vorgeschlagen wird ein Antriebssystem für ein Fahrzeug, welches vorteilhafterweise bei Fahrzeugen eingesetzt werden kann, die eine Mehrzahl von Traktionsmaschinen aufweisen. Solch ein Fahrzeug kann ein Schienenfahrzeug sein. Jedoch können auch andere Arten von Fahrzeugen, wie beispielsweise Automobile, mit einer Mehrzahl von Traktionsmaschinen ausgebildet sein.

Das Antriebssystem für solch ein Fahrzeug umfasst eine Mehrzahl von elektrischen Traktionsmaschinen, wobei die einzelnen elektrischen Traktionsmaschinen jeweils mechanisch mit zumindest einem Antriebsrad gekoppelt sind, um Traktion zu erzeugen.

Unter Mehrzahl von Traktionsmaschinen sind in diesem Zusammenhang mindestens zwei Traktionsmaschinen zu verstehen.

Vorzugsweise weist das Fahrzeug jedoch mehr als zwei Traktionsmaschinen, also mindestens drei Traktionsmaschinen, auf.

Die Traktionsmaschinen sind vorzugsweise als ein- oder mehrphasige Asynchronmaschinen ausgebildet, wobei auch andere Typen, wie beispielsweise ein- oder mehrphasige permanenterregte Synchronmaschinen oder auch ein- oder mehrphasige Reluktanzmaschinen als Traktionsmaschinen eingesetzt werden können.

Die einzelnen Traktionsmaschinen sind über eine entsprechende Antriebswelle jeweils mit zumindest einem Antriebsrad mechanisch verbunden, wobei zwischen der Traktionsmaschine und dem Antriebsrad noch ein Übersetzungsgetriebe angeordnet sein kann. Das von den Traktionsmaschienen im Betrieb erzeuge Drehmoment wird über die Antriebswelle und das Antriebsrad in Traktion umgesetzt, um das Fahrzeug zu beschleunigen, zu verzögern oder das Fahrzeug gegebenenfalls an einer Steigung am Wegrollen zu hindern.

Das Antriebssystem umfasst weiterhin zumindest einen Traktionsstromrichter.

Der Traktionsstromrichter weist zumindest einen Leistungseingang und zumindest einen Leistungsausgang auf, wobei der Traktionsstromrichter eingangsseitig mit einem Gleichspannungszwischenkreis verbindbar ist und ausgangsseitig, also wechselspannungsseitig, eine vorzugsweise mehrphasige Wechselspannung bereit stellt, wobei diese Wechselspannung in Frequenz, Amplitude und Phase variabel ist.

Alternativ dazu kann der Stromrichter eingangsseitig auch mit einer Wechselspannungsquelle verbindbar sein, wie dies bei Matrixumrichtern üblich ist.

Die Begrifflichkeit wechselspannungsseitig würde sich auch in diesem Fall auf den Ausgang des Matrixumrichters beziehen.

Der Traktionsstromrichter ist wechselspannungsseitig mit zumindest einer elektrischen Traktionsmaschine verbunden, um die zumindest eine elektrische Traktionsmaschine mit elektrischer Energie zu versorgen.

Ferner umfasst das Antriebssystem eine Traktionssteuerungs- und Traktionsregelungseinrichtung, kurz Traktionssteuerungseinrichtung, die in Form einer Mikroprozessorsteuerung oder Rechnereinheit ausgeführt sein kann und der Regelung und/oder Steuerung zumindest eines Traktionsstromrichters dient.

Die Traktionssteuerungseinrichtung ist insbesondere derart ausgebildet, dass sie sowohl regeln wie auch steuern kann.

Falls eine Mehrzahl von Traktionsstromrichtern vorhanden ist, kann jedem Traktionsstromrichter jeweils eine Traktionssteuerungseinrichtung zugeordnet sein. Alternativ kann auch eine Traktionssteuerungseinrichtung vorhanden sein, die eine Mehrzahl von Traktionsstromrichtern regelt und/oder steuert.

Die Traktionssteuerungseinrichtung ist ausgebildet, den zumindest einen Traktionsstromrichter während der Bewegung des Fahrzeugs anhand von elektrischen Ausgangswechselgrößen des zumindest einen Traktionsstromrichters zu regeln und/oder steuern. Hierfür weist die Traktionssteuerungseinrichtung zumindest einen ersten Signaleingang auf, um die elektrischen Ausgangswechselgrößen des zumindest einen Traktionsstromrichters messtechnisch zu erfassen.

Zusätzlich oder alternativ kann die Traktionssteuerungseinrichtung über den zumindest einen ersten Signaleingang auch zumindest eine weitere oder andere Größe, insbesondere elektrische Größe, des zumindest einen Traktionsstromrichters erfassen, um auf eine Drehbewegung zumindest eines Antriebsrades zurückzuschließen.

Dies können beispielsweise Spannung und/oder Strom am Leistungseingang des Traktionsstromrichters sein.

Die Größe kann insbesondere eine solche Größe sein, die von einem elektrischen und/oder magnetischen Zustand der elektrischen Traktionsmaschine oder zumindest einer der elektrischen Traktionsmaschinen beeinflusst wird, wobei der Zustand von einer Bewegung und/oder Position eines Läufers der elektrischen Traktionsmaschine abhängig ist. Beispiele für solche Größen werden in der EP 2 023 479 B1, Absatz [0001], beschrieben, zum Beispiel die den Statorstrom beeinflussende Läufer-Rück-EMK oder der aus der Kopplung des stromführenden Statorleiters mit einer Testsignalquelle resultierende. Dieser erste Signaleingang ist vorzugsweise eine Schnittstelle, die es ermöglicht analoge Signale von Strommesssensoren und/oder Spannungsmesssensoren signaltechnisch weiter zu verarbeiten.

Die analogen Signale müssen vor der Weiterverarbeitung entsprechend digitalisiert werden.

Auch kann dieser Signaleingang alternativ oder zusätzlich ausgebildet sein, bereits digitalisierte Signale von Strommesssensoren und/oder Spannungsmesssensor signaltechnisch weiter zu verarbeiten.

Auch weist die Traktionssteuerungseinrichtung einen Signaleingang (z. B. einen zweiten Signaleingang) auf, um die Ausgangssignale einer Erfassungseinrichtung zur Erfassung einer Drehbewegung eines Rades einzulesen.

Eine Drehbewegung eines Rades resultiert in einer Veränderung des Drehwinkels des Rades. Diese Veränderung des Drehwinkels des Rades kann die Erfassungseinrichtung erfassen.

Die Erfassungseinrichtung kann ein analoges Signal bereitstellen, welches von der Traktionssteuerungseinrichtung vor der Weiterverarbeitung digitalisiert werden muss.

Alternativ dazu, kann das Signal jedoch bereits in digitalisierter Form von der Erfassungseinrichtung bereitgestellt werden.

Dieses analoge oder digitalisierte Signal kann ein einfaches binäres Signal sein, welches signalisiert, dass das Rad eine Drehbewegung ausführt, aber keine weiteren auswertbaren Informationen bereit stellt.

Das durch die Erfassungseinrichtung bereitgestellte Signal wird während der Bewegung, also während eines Fahrbetriebs des Fahrzeugs, von der Traktionssteuerungseinrichtung nicht ausgewertet.

Obwohl das Antriebssystem solch eine Erfassungseinrichtung aufweist, ist es aufgrund diesen Umstands weiterhin als drehgeberlos ausgebildet anzusehen, wenn Signale der Erfassungseinrichtung während der Fahrt des Fahrzeugs nicht zur Regelung und/oder Steuerung von Traktionsstromrichter und während der Fahrt des Fahrzeugs nicht zur Erfassung einer Drehbewegung eines Rades verwendet werden.

Insbesondere ist die Traktionssteuerungseinrichtung ausgebildet, Signale der Erfassungseinrichtung während der Fahrt des Fahrzeugs nicht zur Regelung und/oder Steuerung zumindest eines Traktionsstromrichters zu verwenden und/oder nicht für eine Detektion einer Drehbewegung zumindest eines Rades des Fahrzeugs zu verwenden.

Wie im weiteren Verlauf dieser Spezifikation deutlich wird, wird das Signal der Erfassungseinrichtung ausschließlich während des Stillstands des Fahrzeuges ausgewertet. "Während des Stillstands" ist insbesondere so zu verstehen, dass der Stillstand tatsächlich besteht oder bestehen soll. Beispielsweise ist eine mechanische Bremse des Schienenfahrzeugs und/oder eine dynamische Bremse des Schienenfahrzeugs während des Stillstands aktiv. Trotz der aktiven Bremse(n) kann es zu einer Radbewegung kommen, zum Beispiel weil die auf zumindest ein Rad des Schienenfahrzeugs wirkende(n) Bremsbacke(n) einer mechanischen Bremse keine ausreichende Bremskraft erzeugen.

Außerdem weist die Traktionssteuerungseinrichtung zumindest einen ersten Signalausgang auf, um den zumindest einen Traktionsstromrichter anzusteuern.

Durch die Ansteuerung des Traktionsstromrichters kann die Wandlung des Traktionsstromrichters beeinflusst werden. Insbesondere kann durch die Ansteuerung des Traktionsstromrichters die Frequenz, Amplitude und/oder Phase der ausgangsseitigen Wechselspannung beeinflusst werden.

Ferner weist die Traktionssteuerungseinrichtung zumindest einen weiteren Signaleingang auf, der dazu dient Steuerungssignale von einer übergeordneten Fahrzeugsteuerung zu empfangen.

Diese Steuerungssignale können beispielsweise Informationen enthalten, die die Geschwindigkeit und/oder die Beschleunigung des Fahrzeugs betreffen.

Anhand dieser Informationen der übergeordneten Fahrzeugsteuerung, beeinflusst die Traktionssteuerungseinrichtung den zumindest einen Traktionsstromrichter, insbesondere die elektrischen Ausgangswechselgrößen.

Die Traktionssteuerungseinrichtung ist derart ausgebildet, dass sie die Bewegung des Fahrzeugs anhand von elektrischen Ausgangswechselgrößen des zumindest einen Traktionsstromrichters regelt.

Hierfür weist die Traktionssteuerungseinrichtung einen Programmablauf auf, welcher die ausgangsseitigen Wechselgrößen des Traktionsstromrichters erfasst, anhand der Vorgabe der übergeordneten Fahrzeugsteuerung eine Frequenz, Amplitude und/oder Phase der ausgangsseitigen Wechselspannung des Traktionsstromrichters berechnet, und diese sodann im Traktionsstromrichter einstellt.

Die Traktionssteuerungseinrichtung erfasst überdies mit den eingangs erwähnten drehgeberlosen Verfahren die Position des Rotors und regelt die ausgangsseitige Wechselspannung des Traktionsstromrichter in Frequenz, Amplitude und/oder Phase entsprechend der Rotorposition der Mehrzahl von elektrischen Traktionsmaschienen.

Insbesondere zur Auswertung mit den vorgenannten Verfahren, erfasst die Traktionssteuerungseinrichtung eine Drehbewegung eines Antriebsrades oder eines nicht angetriebenen Rades des Fahrzeugs, anhand der Auswertung zumindest einer hierfür geeigneten Erfassungseinrichtung, wobei die zumindest eine Erfassungseinrichtung keine elektrischen Ausgangswechselgrößen des zumindest einen Traktionsstromrichters und auch keine Größe erfasst, die von dem elektrischen und/oder magnetischen Zustand der Traktionsmaschine(n) abhängt.

Die Traktionssteuerungseinrichtung regelt den zumindest einen Traktionsstromrichter in diesem Betriebspunkt hierbei derart, dass keine elektrischen Ausgangswechselgrößen erzeugt werden.

Hierfür wertet die Traktionssteuerungseinrichtung das Signal insbesondere an dem zweiten Signaleingang aus, um die Ausgangssignale einer Erfassungseinrichtung zur Erfassung einer Drehbewegung eines Rades einzulesen.

Die Erfassungseinrichtung ist vorzugsweise mit einem Rad, welches ein Antriebsrad oder ein nichtangetriebenes Rad sein kann, verbunden um eine Drehbewegung des Rades in auswertbare Signale zu wandeln.

Das bedeutet insbesondere, dass wenn ein Rad eine Drehbewegung ausführt, kann die Erfassungseinrichtung diese Drehbewegung anhand der auswertbaren Signale feststellen.

Diese Wandlung einer Drehbewegung in auswertbare Signale erfolgt unabhängig von dem Betrieb des zumindest einen Traktionsstromrichters, insbesondere unabhängig von den elektrischen Ausgangswechselgrößen des zumindest einen Traktionsstromrichters. Vielmehr benötigt die Erfassungseinrichtung für die Erfassung einer Drehbewegung und Bereitstellung eines Signals besonders wenig Energie. Vorzugsweise beträgt der Energieverbrauch im Betrieb der Erfassungseinrichtung weniger als 100 Watt, besonders bevorzugt jedoch weniger als 10 Watt.

Wie oben beschrieben, kann die Erfassungseinrichtung ein analoges oder ein bereits digitalisiertes Signal bereitstellen.

Die Auswertung der Erfassungseinrichtung, alternativ zur Auswertung der elektrischen Ausgangswechselgrößen oder der Größe, die von dem elektrischen und/oder magnetischen Zustand der Traktionsmaschine(n) abhängt, hat den Vorteil, dass das Fahrzeug während des Stillstand besonders wenig Energie verbraucht, da der zumindest eine Traktionsstromrichter keine elektrischen Ausgangswechselgrößen für die Erfassung einer Drehbewegung zur Verfügung stellt und zum Beispiel auch keine Testsignalquelle erforderlich betrieben werden muss.

Zusätzlich zur Auswertung der ausgangsseitigen Wechselgrößen und/oder der Größe, die von dem elektrischen und/oder magnetischen Zustand der Traktionsmaschine(n) abhängt, während der Fahrt des Fahrzeugs erfasst die Traktionssteuerungseinrichtung hierbei eine Drehbewegung eines Antriebsrades oder eines nicht angetriebenen Rades des Fahrzeugs, anhand der Auswertung zumindest einer hierfür geeigneten Erfassungseinrichtung, wobei die zumindest eine Erfassungseinrichtung keine elektrischen Ausgangswechselgrößen des zumindest einen Traktionsstromrichters und auch keine Größe erfasst, die von dem elektrischen und/oder magnetischen Zustand der Traktionsmaschine(n) abhängt.

Hierfür wertet die Traktionssteuerungseinrichtung insbesondere an einem zweiten Signaleingang das Signal aus, um die Ausgangssignale einer Erfassungseinrichtung zur Erfassung einer Drehbewegung eines Rades einzulesen.

Insbesondere werden jedoch Signale der Erfassungseinrichtung während der Fahrt des Fahrzeugs nicht zur Regelung und/oder Steuerung zumindest eines Traktionsstromrichters verwendet werden und/oder nicht für eine Detektion einer Drehbewegung zumindest eines Rades des Fahrzeugs verwendet.

Die Erfassungseinrichtung ist vorzugsweise mit einem Rad, welches ein Antriebsrad oder ein nichtangetriebenes Rad sein kann, verbunden, um eine Drehbewegung des Rades in auswertbare Signale zu wandeln.

Das bedeutet insbesondere, dass wenn ein Rad eine Drehbewegung ausführt, kann die Erfassungseinrichtung diese Drehbewegung anhand der auswertbaren Signale feststellen.

Vielmehr benötigt die Erfassungseinrichtung für die Erfassung einer Drehbewegung und Bereitstellung eines Signals besonders wenig Energie. Vorzugsweise beträgt der Energieverbrauch im Betrieb der Erfassungseinrichtung weniger als 100 Watt, besonders bevorzugt jedoch weniger als 10 Watt.

Die Wandlung einer Drehbewegung in auswertbare Signale erfolgt unabhängig von dem Betrieb des zumindest einen Traktionsstromrichters, insbesondere unabhängig von den elektrischen Ausgangswechselgrößen des zumindest einen Traktionsstromrichters und von einer Größe, die von dem elektrischen und/oder magnetischen Zustand der Traktionsmaschine(n) abhängt.

Wie oben beschrieben, kann die Erfassungseinrichtung ein analoges oder ein bereits digitalisiertes Signal bereitstellen.

Die Auswertung der Erfassungseinrichtung, zusätzlich zur Auswertung der elektrischen Ausgangswechselgrößen zur Detektion einer Drehbewegung hat zudem den Vorteil, dass die Erfassungseinrichtung besonders zuverlässig eine mögliche Bewegung des Fahrzeugs im Zustand des Stillstands des Fahrzeugs detektieren kann, weil ein zusätzliches redundantes Messignal zur Verfügung steht.

In einer vorteilhaften Ausgestaltung der Erfindung ist das Antriebssystem, insbesondere ist die Traktionssteuerungseinrichtung ferner ausgebildet, den zumindest einen Traktionsstromrichter während des Zustands des Stillstands des Fahrzeugs derart zu regeln oder zu steuern, dass mindestens eine, höchstens jedoch zwei der Mehrzahl der elektrischen Traktionsmaschinen mit elektrischer Energie versorgt wird oder werden.

Dies ist besonders vorteilhaft, wenn das Fahrzeug mindestens drei elektrische Traktionsmaschinen aufweist.

Denn hierbei wird eine reduzierte Anzahl von elektrischen Traktionsmaschienen während des Stillstands des Fahrzeugs mit elektrischer Energie versorgt, um über die Auswertung der elektrischen Ausgangswechselgrößen oder der Größe, die von dem elektrischen und/oder magnetischen Zustand der Traktionsmaschine(n) abhängt, mit Hilfe der eingangs erwähnten drehgeberlosen Verfahren die Position des Rotors anhand der Auswertung der elektrischen Ausgangswechselgrößen des Traktionsstromrichters zu erfassen und auf eine Drehbewegung zurückzuschießen.

Dies führt dazu, dass der Energieverbrauch des Fahrzeugs während des Stillstands, insbesondere zur Überwachung des Fahrzeugstillstands, reduziert wird.

Voraussetzung für eine derartige Ausgestaltung der Erfindung ist, dass der zumindest eine Traktionsstromrichter Ausgangswechselgrößen erzeugt oder eine Größe erfasst wird, die von dem elektrischen und/oder magnetischen Zustand der Traktionsmaschine(n) abhängt, wobei die Ausgangswechselgrößen und/oder die vorgenannte Größe durch die Traktionssteuerungseinrichtung ausgewertet wird/werden und die Traktionssteuerungseinrichtung nicht ausschliesslich Signale der Erfassungseinrichtung zur Erfassung einer Drehbewegung auswertet.

Alternativ oder zusätzlich zu der Nutzung der Erfassungseinrichtung zur Erfassung einer Drehbewegung eines Rades im Zustand des Stillstands kann die Traktionssteuerungseinrichtung derart ausgebildet sein, während des Zustands des Stillstands des Fahrzeugs eine Drehbewegung zumindest eines Antriebsrades des Fahrzeugs zu detektieren, wobei die Traktionssteuerungseinrichtung hierbei eine Drehbewegung anhand einer Veränderung in den elektrischen Ausgangswechselgrößen des zumindest einen Traktionsstromrichters detektiert.

Hierfür erhält die Traktionssteuerungseinrichtung von der übergeordneten Fahrzeugsteuerung die Information, dass sich das Fahrzeug im Stillstand befindet bzw befinden soll.

Die Traktionssteuerungseinrichtung regelt sodann die Frequenz, Amplitude und/oder Phase der ausgangsseitigen Wechselspannung des zumindest einen Traktionsstromrichters derart, dass die im Fahrzeug vorhandenen Traktionsmaschinen kein Drehmoment erzeugen.

Die Traktionssteuerungseinrichtung erfasst außerdem über den ersten Signaleingang die elektrischen Ausgangswechselgrößen des Traktionsstromrichters und berechnet überdies mit den eingangs erwähnten drehgeberlosen Verfahren die Position des Rotors anhand der Auswertung der elektrischen Ausgangswechselgrößen des Traktionsstromrichters.

Da zumindest ein Antriebsrad mit der Traktionsmaschine mechanisch gekoppelt ist, verändert sich die Position des Rotors der Traktionsmaschienen, falls das Rad eine Drehbewegung erfährt.

Dies erfasst die Traktionssteuerungseinrichtung dadurch, dass sie während des Stillstands des Fahrzeugs fortlaufend, also kontinuierlich, die Position des Rotors mit den vorgenannten Verfahren bestimmt. Die Detektion der Drehbewegung im Stillstand allein anhand einer Veränderung in den elektrischen Ausgangswechselgrößen ist jedoch nicht Gegenstand der beigefügten Ansprüche.

In einer weiteren vorteilhaften Ausgestaltung der Erfindung ist das Antriebssystem, insbesondere ist die Traktionssteuerungseinrichtung ferner ausgebildet, den zumindest einen Traktionsstromrichter während des Stillstands des Fahrzeugs derart zu regeln, dass höchstens eine der Mehrzahl der elektrischen Traktionsmaschinen mit elektrischer Energie versorgt wird.

Dies ist besonders vorteilhaft, wenn das Fahrzeug eine Mehrzahl elektrischer Traktionsmaschinen aufweist.

Denn hierbei wird, verglichen mit den vorangegangenen Ausgestaltungen der Erfindung, eine weiter reduzierte Anzahl von Traktionsmaschienen während des Stillstands des Fahrzeugs mit elektrischer Energie versorgt, um über die Auswertung der elektrischen Ausgangswechselgrößen mit Hilfe der eingangs erwähnten drehgeberlosen Verfahren die Position des Rotors und/oder die Geschwindigkeit des Rotors anhand der Auswertung der elektrischen Ausgangswechselgrößen des Traktionsstromrichters zu erfassen und auf eine Drehbewegung zurückzuschießen.

Dies führt dazu, dass der Energieverbrauch des Fahrzeugs während des Stillstands, insbesondere zur Überwachung des Stillstands, weiter reduziert wird.

Voraussetzung für eine derartige Ausgestaltung der Erfindung ist, dass der zumindest eine Traktionsstromrichter Ausgangswechselgrößen erzeugt, die durch die Traktionssteuerungseinrichtung ausgewertet werden und die Traktionssteuerungseinrichtung nicht ausschliesslich Signale der Erfassungseinrichtung zur Erfassung einer Drehbewegung auswertet.

In einer weiteren vorteilhaften Ausgestaltung der Erfindung ist das Antriebssystem mit einer Erfassungseinrichtung ausgebildet, wobei die Erfassungseinrichtung ein Drehgeber, ein Beschleunigungssensor, ein Resolver oder ein Schwerkraftsensor ist.

Die Erfassungseinrichtung vorgenannter Art ist entweder an einem Rad angebracht, wobei das Rad ein Antriebsrad oder nichtangetriebenes Rad sein kann.

Alternativ kann die Erfassungseinrichtung auch an der Antriebswelle der Traktionsmaschienen angebracht sein.

In jeden Fall muss die Erfassungseinrichtung derart am Fahrzeug angebracht sein, dass eine Drehbewegung eines Rades in ein Signal gewandelt wird, welches von der Traktionssteuerungseinrichtung ausgewertet werden kann.

Durch die Verwendung einer Erfassungseinrichtung vorgenannter Art ergeben sich mehrere Vorteile.

Einerseits weisen die Erfassungseinrichtungen vorgenannter Art einen sehr geringe Energieverbrauch auf, welcher deutlich unter 10 Watt liegt.

Was den Energieverbrauch des Fahrzeugs während des Stillstands weiter reduziert. Außerdem sind die Erfassungseinrichtungen vorgenannter Art im Aufbau wenig komplex, sodass die Erfassung einer Drehbewegung sehr robust und zuverlässig funktioniert, was gerade bei dieser Anwendung essentiell für die Sicherheit ist.

Weiter vorgeschlagen wird ein Verfahren zum Betreiben des vorhergehend erläuterten elektrischen Antriebssystems, welches nachfolgend beschrieben wird.

Anzumerken ist, dass das Verfahren sowohl für das vorhergehende erläuterte Antriebssystem, wie auch für ein Fahrzeug, insbesondere Schienenfahrzeug, welches mit dem vorhergehend erläuterten Antriebssystem ausgebildet ist, anwendbar ist.

Das Verfahren umfasst in einem ersten Betriebsmodus das Versorgen der elektrischen Traktionsmaschine oder der Mehrzahl der elektrischen Traktionsmaschinen mit elektrischer Energie, um Traktion zu erzeugen, wobei die Drehzahl, die Geschwindigkeit, das Drehmoment und/oder die Lage des Rotors der elektrischen Traktionsmaschine oder zumindest einer der elektrischen Traktionsmaschinen während der Bewegung des Fahrzeugs anhand von elektrischen Ausgangswechselgrößen des zumindest einen Traktionsstromrichters geregelt werden oder wird. Alternativ oder zusätzlich wird die Drehzahl, die Geschwindigkeit, das Drehmoment und/oder die Lage des Rotors der elektrischen Traktionsmaschine oder zumindest einer der elektrischen Traktionsmaschinen während der Bewegung des Fahrzeugs anhand von zumindest einer Größe geregelt, die von einem elektrischen und/oder magnetischen Zustand der elektrischen Traktionsmaschine oder zumindest einer der elektrischen Traktionsmaschinen beeinflusst wird, wobei der Zustand von einer Bewegung und/oder Position eines Läufers der elektrischen Traktionsmaschine(n) abhängig ist.

Die elektrische Energie wird von dem zumindest einen Traktionsstromrichter zur Verfügung gestellt, wobei die Regelung des zumindest einen Traktionsstromrichters, sowie der elektrischen Traktionsmaschinen von der Traktionssteuerungseinrichtung durchgeführt wird.

Ferner umfasst das Verfahren in einem zweiten Betriebsmodus: Detektieren einer Drehbewegung zumindest eines Rades des Fahrzeugs (insbesondere eines Antriebsrades oder eines nicht angetriebenen Rades), durch Auswerten zumindest einer für die Erfassung einer Drehbewegung eines Antriebsrades geeigneten Erfassungseinrichtung, wobei die zumindest eine Erfassungseinrichtung keine elektrische Ausgangswechselgröße des zumindest einen Traktionsstromrichters und keine Größe erfasst, die von einem elektrischen und/oder magnetischen Zustand der elektrischen Traktionsmaschine oder zumindest einer der elektrischen Traktionsmaschinen beeinflusst wird, wobei der Zustand von einer Bewegung und/oder Position eines Läufers der elektrischen Traktionsmaschine abhängig ist.

Das von der Erfassungseinrichtung zur Verfügung gestellte Signal, wird durch die Traktionssteuerungseinrichtung ausgewertet.

Vorzugsweite befindet sich der zumindest eine Traktionsstromrichter bei diesem alternativen Verfahrensschritt in einem Ruhezustand, sodass keine elektrische Traktionsmaschinen mit elektrischer Energie versorgt wird.

Das Verfahren in einem zweiten Betriebsmodus kann alternativ oder zusätzlich zu der Verwendung der genannten Erfassungseinrichtung umfassen: Das Versorgen der elektrischen Traktionsmaschine oder zumindest einer der Mehrzahl von elektrischen Traktionsmaschinen mit elektrischer Energie, ohne dabei Traktion zu erzeugen. Hierfür regelt die Traktionssteuerungseinrichtung den zumindest einen Traktionsstromrichter entsprechend. Überdies umfasst das Verfahren bei dieser Ausführungsform in dem zweiten Betriebsmodus, das Detektieren einer Drehbewegung zumindest eines Antriebsrades des Fahrzeugs, anhand einer Veränderung in den elektrischen Ausgangswechselgrößen des zumindest einen Traktionsstromrichters. Hierfür wertet die Traktionssteuerungseinrichtung die Ausgangswechselgrößen des zumindest einen Traktionsstromrichters entsprechend den eingangs erwähnten drehgerberlosen Verfahren aus und bestimmt die Position und/oder die Geschwindigkeit des Rotors fortlaufend.

Hervorzuheben ist, dass die Verfahrensschritte des zweiten Betriebsmodus ausschließlich während des Zustands des Stillstands des Fahrzeugs ausgeführt werden und entsprechend durch die Traktionssteuerungseinrichtung ausgeführt werden.

Gemäß einer bevorzugten Ausgestaltung des Verfahrens werden während des Zustands des Stillstands des Fahrzeugs höchstens zwei der Mehrzahl von elektrischen Traktionsmaschinen mit elektrischer Energie versorgt, ohne dabei Traktion zu erzeugen.

Die Traktionssteuerungseinrichtung regelt/steuert den zumindest einen Traktionsstromrichter entsprechend.

Ist das Fahrzeug mit mehr als zwei elektrischen Traktionsmaschinen ausgebildet, führt die Reduzierung der Anzahl der mit elektrischer Energie versorgten elektrischen Traktionsmaschinen während des Stillstand, zu einer Reduktion des Energieverbrauchs des Fahrzeugs während des Stillstands.

Gemäß einer weiteren bevorzugten Ausgestaltung des Verfahrens wird während des Zustands des Stillstands des Fahrzeugs höchstens eine der Mehrzahl von elektrischen Traktionsmaschinen mit elektrischer Energie versorgt, ohne dabei Traktion zu erzeugen.

Die Traktionssteuerungseinrichtung regelt/steuert den zumindest einen Traktionsstromrichter entsprechend.

Ist das Fahrzeug mit einer Mehrzahl von elektrischen Traktionsmaschinen ausgebildet, führt die weitere Reduzierung der Anzahl der mit elektrischer Energie versorgten elektrischen Traktionsmaschinen während des Stillstand zu einer weiteren Reduktion des Energieverbrauchs des Fahrzeugs, im Vergleich zur Versorgung höchstens zweier der Mehrzahl von elektrischen Traktionsmaschinen, während des Stillstands.

Gemäß einer weiteren bevorzugten Ausgestaltung des Verfahrens ist die Erfassungseinrichtung ein Drehgeber, ein Beschleunigungssensor, ein Resolver oder ein Schwerkraftsensor.

Dies hat den Vorteil, dass das Verfahren, insbesondere die Erfassung einer Drehbewegung eines Rades, besonders zuverlässig funktioniert, da die Erfassungseinrichtungen vorgenannter Art im Aufbau wenig komplex sind. Die Erfassung einer Drehbewegung ist hierbei sehr robust und zuverlässig, was gerade bei dieser Anwendung essenziell für die Sicherheit ist.

Vorgeschlagen wird ferner ein Fahrzeug, insbesondere Schienenfahrzeug, mit einem Antriebssystem wie zuvor beschrieben, wobei das Antriebssystems mit dem zuvor beschriebenen Verfahren betrieben wird.

Im Folgenden werden Ausführungsformen der Erfindung anhand der beigefügten schematischen Figuren erläutert. In Ihrer Art und/oder Funktion übereinstimmende Merkmale können dabei figurenübergreifend mit den gleichen Bezugszeichen versehen sein.

Es stellen dar:
- Fig. 1: Schematische Darstellung eines Antriebsystems einer ersten nicht erfindungsge -mäßen Ausführungsform
- Fig. 2: Schematische Darstellung eines Antriebsystems einer zweiten erfindungsgemäßen Ausführungsform
- Fig. 3: Schematische Darstellung eines Antriebsystems einer dritten erfindungsgemäßen Ausführungsform
- Fig. 4: Schematische Darstellung eines Antriebsystems einer vierten erfindungsgemäßen Ausführungsform
- Fig. 5: Schematische Darstellung eines Schienenfahrzeugverbands mit erfindungsgemäßem Antriebssystem

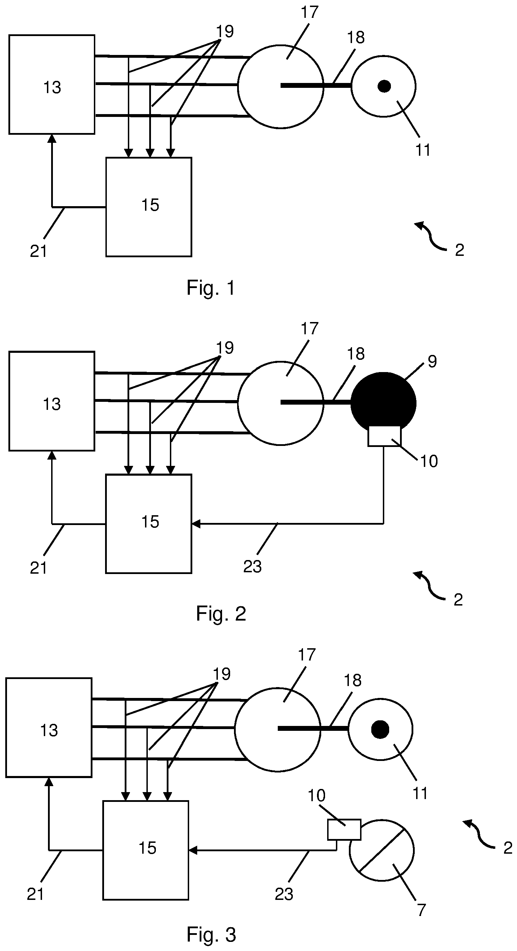

Figur 1 zeigt eine schematische Darstellung eines Antriebsystems 2 einer ersten nicht erfindungsgemäßen Ausführungsform, wobei ein Antriebssystem 2 dieser Art in einem nicht dargestellten Fahrzeug verbaut ist.

Das Antriebssystem 2 umfasst hierbei einen Traktionsstromrichter 13, eine Traktionsmaschine 17, die mit dem Traktionsstromrichter 13 elektrisch verbunden ist, eine Antriebswelle 18, welche die Traktionsmaschine 17 mit einem Antriebsrad ohne Drehgeber 11 kraftschlüssig verbindet.

Außerdem umfasst das Antriebssystem 2 ein Traktionssteuerungsgerät 15, welches signaltechnisch mit dem Traktionsstromrichter 13 verbunden ist.

Das Traktionssteuerungsgerät 15 steuert den Traktionsstromrichter 13 über entsprechende Ansteuersignale 21.

Weiterhin umfasst das Traktionssteuerungsgerät 15 Signaleingänge um die ausgangsseitigen Wechselgrößen 19 des Traktionsstromrichters 13, insbesondere Strom und Spannung, messtechnisch zu erfassen.

Es gilt zwei für das Fahrzeug wesentliche Betriebsfälle zu unterscheiden.

Im ersten Betriebsfall wird der Traktionsstromrichter 13 vom Traktionssteuerungsgerät 15 derart gesteuert, dass eine dreiphasige Wechselspannung mit geeigneter Frequenz, Amplitude und Phase generiert wird. Anhand dieser Wechselspannung erzeugt die Traktionsmaschine 17 ein Drehmoment.

Dieses Drehmoment wird über die Antriebswelle 18 (und ggf. ein zwischen Traktionsmaschine 17 und Antriebsrad ohne Drehgeber 11 liegendes Getriebe) auf das Antriebsrad ohne Drehgeber 11 übertragen.

Aufgrund des Kontaktes zwischen Rad und Untergrund wird Traktion erzeugt und das Fahrzeug beschleunigt oder auch verzögert.

Dieser beschriebene Betriebsfall des Antriebssystems 2 findet während der Bewegung des Fahrzeugs eine Anwendung.

Im zweiten Betriebsfall wird der Traktionsstromrichter 13 vom Traktionssteuerungsgerät 15 derart gesteuert, dass eine dreiphasige Wechselspannung mit geeigneter Frequenz, Amplitude und Phase generiert wird. Allerdings wird diese Wechselspannung derart geregelt/gesteuert, dass die Traktionsmaschine 17 kein Drehmoment erzeugt und das Fahrzeug sodann im Stillstand verharrt.

Da das Antriebsrad ohne Drehgeber 11 mit der Traktionsmaschine 17 mechanisch gekoppelt ist, verändert sich die Lage des Rotors (nicht dargestellt) der Traktionsmaschine 17 bei einer Drehbewegung des Antriebsrads ohne Drehgeber 11.

Die Lageveränderung des Rotors geht mit einer Veränderung der elektrischen Parameter, wie beispielsweise eine Veränderung eines Blindwiderstands der Traktionsmaschine 17, einher.

Die Veränderung des Blindwiderstands hat folglich eine Veränderung in den ausgangsseitigen Wechselgrößen 19 des Traktionsstromrichters 13 zur Folge und dies kann vom Traktionssteuerungsgerät 15 anhand der Auswertung der ausgangsseitigen Wechselgrö-βen 19 erfasst und auf eine Drehbewegung geschlossen werden. Bei der Beschreibung der Ausführungsbeispiele anhand der beigefügten Figuren wird die alternative oder zusätzliche Vorgehensweise, bei der zumindest eine Größe messtechnisch erfasst, die von dem elektrischen und/oder magnetischen Zustand der Traktionsmaschine(n) abhängt, und die Größe zur Ermittlung einer Drehbewegung ausgewertet wird, nicht weiter erwähnt. Diese Alternative bzw. zusätzliche Verfahrensweise ist jedoch bei allen Ausführungsbeispielen möglich.

Der Einsatz anderer aus der Literatur bekannter Verfahren sind für diesen Zweck sind möglich.

Dieser beschriebene Betriebsfall des Antriebssystems 2 findet im Zustand des Stillstands des Fahrzeugs eine Anwendung.

In keinem der beiden zuvor genannten Betriebsfälle des Antriebssystems 2 benötigt das Traktionssteuerungsgerät 15 ein Drehgebersignal 23 zur Reglung/Steuerung des Traktionsstromrichters 13.

Das Antriebssystems 2 ist folglich vollständig drehgeberlos ausgeführt.

Die ausgangsseitigen Wechselgrößen 19 des Traktionsstromrichters 13 werden ausschliesslich anhand der vom Traktionssteuerungsgerät 15 erfassten ausgangsseitigen Wechselgrößen 19 und der Vorgabe einer Geschwindigkeit und/oder Beschleunigung des Fahrzeugs einer übergeordneten nicht dargestellten Fahrzeugsteuerung geregelt/gesteuert.

Hierzu kommen die aus der Literatur bekannten Steuerungs- und Regelungsverfahren für drehgeberlose drehzahlveränderliche Antrieb zum Einsatz.

Figur 2 zeigt eine schematische Darstellung eines Antriebsystems 2 einer zweiten erfindungsgemäßen Ausführungsform, wobei ein Antriebssystem 2 dieser Art in einem nicht dargestellten Fahrzeug verbaut ist.

Das Antriebssystem 2 umfasst hierbei einen Traktionsstromrichter 13, eine Traktionsmaschine 17 die mit dem Traktionsstromrichter 13 elektrisch verbunden ist, eine Antriebswelle 18, welche die Traktionsmaschine 17 mit einem Antriebsrad mit Drehgeber 9 kraftschlüssig verbindet.

Überdies umfasst das Antriebssystem 2 einen Drehgeber 10 der hierbei am Antriebsrad mit Drehgeber 9 angeordnet ist und Drehbewegungen des Antriebsrads mit Drehgeber 9 in Drehgebersignale 23 wandelt.

Alternativ dazu kann der Drehgeber 10 auch an der Antriebswelle 18 oder an der nicht dargestellten Ausgangswelle der Traktionsmaschine 17 angebracht sein.

Außerdem umfasst das Antriebssystem 2 ein Traktionssteuerungsgerät 15, welches signaltechnisch mit dem Traktionsstromrichter 13 verbunden ist.

Das Traktionssteuerungsgerät 15 steuert den Traktionsstromrichter 13 über entsprechende Ansteuersignale 21.

Weiterhin umfasst das Traktionssteuerungsgerät 15 Signaleingänge um die ausgangsseitigen Wechselgrößen 19 des Traktionsstromrichters 13, insbesondere Strom und Spannung, messtechnisch zu erfassen.

Zudem weist das Traktionssteuerungsgerät 15 zumindest einen Signaleingang auf, um das Drehgebersignal 23 des Drehgebers 10 messtechnisch zu erfassen.

Auch bei diesem Ausführungsbeispiel gilt es zwei wesentliche Betriebsfälle des Antriebssystems 2 zu unterscheiden.

Im ersten Betriebsfall wird der Traktionsstromrichter 13 vom Traktionssteuerungsgerät 15 derart gesteuert, dass eine dreiphasige Wechselspannung mit geeigneter Frequenz, Amplitude und Phase generiert wird. Anhand dieser Wechselspannung erzeugt die Traktionsmaschine 17 ein Drehmoment.

Dieses Drehmoment wird über die Antriebswelle 18 (und ggf. ein zwischen Traktionsmaschine 17 und Antriebsrad ohne Drehgeber 11 liegendes Getriebe) auf das Antriebsrad mit Drehgeber 9 übertragen.

Aufgrund des Kontaktes zwischen Rad und Untergrund wird Traktion erzeugt und das Fahrzeug beschleunigt oder auch verzögert.

Dieser beschriebene Betriebsfall des Antriebssystems 2 findet während der Bewegung des Fahrzeugs eine Anwendung.

Im zweiten Betriebsfall befindet sich der Traktionsstromrichter 13 in einem Ruhezustand, dass bedeutet, dass keine Wechselspannung am Leistungsausgang des Traktionsstromrichters 13 erzeugt wird.

Hingegen wird in diesem Betriebsfall das Drehgebersignal 23 durch das Traktionssteuerungsgerät 15 ausgewertet.

Das Traktionssteuerungsgerät 15 ist durch die Auswertung des Drehgebersignal 23 somit in der Lage eine Drehbewegung des Antriebsrads mit Drehgeber 9 zu detektieren. Dieser beschriebene Betriebsfall des Antriebssystems 2 findet während des Zustands des Stillstands des Fahrzeugs eine Anwendung.

Im ersten Betriebsfall benötigt das Traktionssteuerungsgerät 15 jedoch kein Drehgebersignal 23 zur Reglung/Steuerung des Traktionsstromrichters 13.

Die ausgangsseitigen Wechselgrößen 19 des Traktionsstromrichters 13 werden ausschliesslich anhand der erfassten ausgangsseitigen Wechselgrößen 19 und der Vorgabe einer Geschwindigkeit und/oder Beschleunigung einer übergeordneten nicht dargestellten Fahrzeugsteuerung geregelt/gesteuert.

Hierzu kommen die aus der Literatur bekannten Steuerungs- und Regelungsverfahren für drehgeberlose drehzahlveränderliche Antrieb zum Einsatz.

Figur 3 zeigt eine schematische Darstellung eines Antriebsystems 2 einer dritten erfindungsgemäßen Ausführungsform, wobei ein Antriebssystem 2 dieser Art in einem nicht dargestellten Fahrzeug verbaut ist.

Das Antriebssystem 2 umfasst hierbei einen Traktionsstromrichter 13, eine Traktionsmaschine 17 die mit dem Traktionsstromrichter 13 elektrisch verbunden ist, eine Antriebswelle 18, welche die Traktionsmaschine 17 mit einem Antriebsrad ohne Drehgeber 11 kraftschlüssig verbindet.

Außerdem umfasst das Antriebssystem 2 ein Traktionssteuerungsgerät 15, welches signaltechnisch mit dem Traktionsstromrichter 13 verbunden ist.

Das Traktionssteuerungsgerät 15 steuert den Traktionsstromrichter 13 über entsprechende Ansteuersignale 21.

Weiterhin umfasst das Traktionssteuerungsgerät 15 Signaleingänge um die ausgangsseitigen Wechselgrößen 19 des Traktionsstromrichters 13, insbesondere Strom und Spannung, messtechnisch zu erfassen.

Überdies umfasst das Antriebssystem 2 einen Drehgeber 10, der hierbei an einem antriebslosen Rad 7 angeordnet ist und Drehbewegungen in Drehgebersignale 23 wandelt. Zudem weist das Traktionssteuerungsgerät 15 zumindest einen Signaleingang auf, um das Drehgebersignal 23 des Drehgebers 10 messtechnisch zu erfassen.

Auch bei diesem Ausführungsbeispiel gilt es zwei wesentliche Betriebsfälle des Antriebssystems 2 zu unterscheiden.

Im ersten Betriebsfall wird der Traktionsstromrichter 13 vom Traktionssteuerungsgerät 15 derart gesteuert, dass eine dreiphasige Wechselspannung mit geeigneter Frequenz, Amplitude und Phase generiert wird. Anhand dieser Wechselspannung erzeugt die Traktionsmaschine 17 ein Drehmoment.

Dieses Drehmoment wird über die Antriebswelle 18 (und ggf. ein zwischen Traktionsmaschine 17 und Antriebsrad ohne Drehgeber 11 liegendes Getriebe) auf das Antriebsrad ohne Drehgeber 11 übertragen.

Aufgrund des Kontaktes zwischen Rad und Untergrund wird Traktion erzeugt und das Fahrzeug beschleunigt oder auch verzögert.

Dieser beschriebene Betriebsfall des Antriebssystems 2 findet während der Bewegung des Fahrzeugs eine Anwendung.

Im zweiten Betriebsfall befindet sich der Traktionsstromrichter 13 in einem Ruhezustand, dass bedeutet, dass keine Wechselspannung am Leistungsausgang des Traktionsstromrichters 13 erzeugt wird.

Hingegen wird in diesem Betriebsfall das Drehgebersignal 23 durch das Traktionssteuerungsgerät 15 ausgewertet.

Das Traktionssteuerungsgerät 15 ist durch die Auswertung des Drehgebersignal 23 somit in der Lage eine Drehbewegung des nichtangetriebenen Rades mit Drehgeber 7 zu detektieren.

Dieser beschriebene Betriebsfall des Antriebssystems 2 findet während des Zustands des Stillstands des Fahrzeugs eine Anwendung.

Im ersten Betriebsfall benötigt das Traktionssteuerungsgerät 15 jedoch kein Drehgebersignal 23 zur Reglung/Steuerung des Traktionsstromrichters 13.

Die ausgangsseitigen Wechselgrößen 19 des Traktionsstromrichters 13 werden ausschliesslich anhand der erfassten ausgangsseitigen Wechselgrößen 19 und der Vorgabe einer Geschwindigkeit und/oder Beschleunigung einer übergeordneten nicht dargestellten Fahrzeugsteuerung geregelt/gesteuert.

Hierzu kommen die aus der Literatur bekannten Steuerungs- und Regelungsverfahren für drehgeberlose drehzahlveränderliche Antrieb zum Einsatz.

Alternativ oder zusätzlich kann im zweiten Betriebsfall der Traktionsstromrichter 13 vom Traktionssteuerungsgerät 15 derart gesteuert werden, dass eine dreiphasige Wechselspannung mit geeigneter Frequenz, Amplitude und Phase generiert wird, wobei diese dreiphasige Wechselspannung die Traktionsmaschine 17, die dem Antriebsrad ohne Drehgeber 11 zugeordnet ist, versorgt.

Diese Wechselspannung wird derart gesteuert/geregelt, dass diese Traktionsmaschine 17 kein Drehmoment erzeugt und das Fahrzeug sodann im Stillstand verharrt.

Da das Antriebsrad ohne Drehgeber 11 mit der Traktionsmaschine 17 mechanisch gekoppelt ist, verändert sich die Lage des Rotors (nicht dargestellt) dieser Traktionsmaschine 17 bei einer Drehbewegung des Antriebsrads ohne Drehgeber 11.

Die Lageveränderung des Rotors geht mit einer Veränderung der elektrischen Parameter, wie beispielsweise eine Veränderung eines Blindwiderstands der Traktionsmaschine 17, einher.

Die Veränderung des Blindwiderstands hat folglich eine Veränderung in den ausgangsseitigen Wechselgrößen 19 des Traktionsstromrichters 13 zur Folge und dies kann vom Traktionssteuerungsgerät 15 anhand der Auswertung der ausgangsseitigen Wechselgrö-βen 19 erfasst und auf eine Drehbewegung geschlossen werden.

Der Einsatz anderer aus der Literatur bekannter Verfahren sind für diesen Zweck sind möglich.

Auch dieser alternative oder zusätzliche Betriebsfall des Antriebssystems 2 findet im Zustand des Stillstands des Fahrzeugs eine Anwendung.

In diesem alternativen oder zusätzlichen Betriebsfall benötigt das Traktionssteuerungsgerät 15 kein Drehgebersignal 23 zur Reglung/Steuerung des Traktionsstromrichters 13. Die ausgangsseitigen Wechselgrößen 19 des Traktionsstromrichters 13 werden ausschliesslich anhand der vom Traktionssteuerungsgerät 15 erfassten ausgangsseitigen Wechselgrößen 19 geregelt/gesteuert.

Hierzu kommen die aus der Literatur bekannten Steuerungs- und Regelungsverfahren für drehgeberlose drehzahlveränderliche Antrieb zum Einsatz.

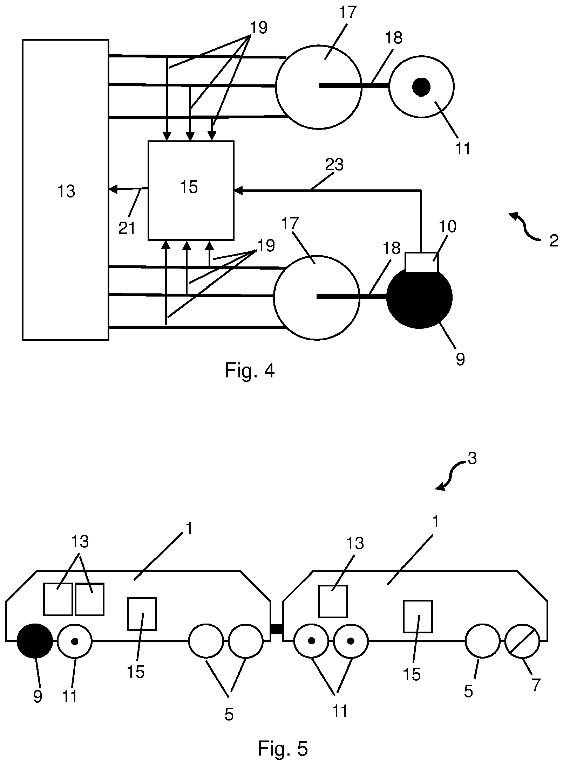

Figur 4 zeigt eine schematische Darstellung eines Antriebsystems 2 einer vierten erfindungsgemäßen Ausführungsform, wobei ein Antriebssystem 2 dieser Art in einem nicht dargestellten Fahrzeug verbaut ist.

Das Antriebssystem 2 umfasst hierbei einen Traktionsstromrichter 13, zwei Traktionsmaschinen 17 die mit dem Traktionsstromrichter 13 elektrisch verbunden sind, zwei Antriebswellen 18, die jeweils die Traktionsmaschinen 17 mit einem Antriebsrad mit Drehgeber 9 und mit einem Antriebsrad ohne Drehgeber 11 kraftschlüssig verbindet. Überdies umfasst das Antriebssystem 2 einen Drehgeber 10 der hierbei am Antriebsrad mit Drehgeber 9 angeordnet ist und Drehbewegungen des Antriebsrads mit Drehgeber 9 in Drehgebersignale 23 wandelt.

Alternativ dazu kann der Drehgeber 10 auch an der Antriebswelle 18 oder an der nicht dargestellten Ausgangswelle der Traktionsmaschine 17, die dem Antriebsrad mit Drehgeber 9 zugeordnet ist, angebracht sein.

Außerdem umfasst das Antriebssystem 2 ein Traktionssteuerungsgerät 15, welches signaltechnisch mit dem Traktionsstromrichter 13 verbunden ist.

Das Traktionssteuerungsgerät 15 steuert den Traktionsstromrichter 13 über entsprechende Ansteuersignale 21.

Weiterhin umfasst das Traktionssteuerungsgerät 15 Signaleingänge um die ausgangsseitigen Wechselgrößen 19 des Traktionsstromrichters 13, insbesondere Strom und Spannung, messtechnisch zu erfassen.

Zudem weist das Traktionssteuerungsgerät 15 zumindest einen Signaleingang auf, um das Drehgebersignal 23 des Drehgebers 10 messtechnisch zu erfassen. Der Traktionsstromrichter 13 ist hierbei als eine Einheit dargestellt und ausgeführt.

Der Traktionsstromrichter 13 kann jedoch als zwei eigenständige Traktionsstromrichter 13 ausgeführt sein, wobei jeder sodann einer Traktionsmaschine 17 zugeordnet ist. Das Traktionssteuerungsgerät 15 wäre dementsprechend anzupassen.

Auch bei diesem Ausführungsbeispiel gilt es zwei wesentliche Betriebsfälle des Antriebssystems 2 zu unterscheiden.

Im ersten Betriebsfall wird der Traktionsstromrichter 13 vom Traktionssteuerungsgerät 15 derart gesteuert, dass dreiphasige Wechselspannungen mit geeigneter Frequenz, Amplitude und Phase generiert werden, um die beide Traktionsmaschienen 17 mit elektrischer Energie zu versorgen. Anhand dieser Wechselspannung erzeugen die beiden Traktionsmaschinen 17 ein Drehmoment.

Dieses hierbei erzeugte Drehmoment wird über die Antriebswellen 18 (und ggf. ein zwischen Traktionsmaschine 17 und Antriebsrad ohne Drehgeber 11 liegendes Getriebe) auf das Antriebsrad mit Drehgeber 9 und das Antriebsrad ohne Drehgeber 11 übertragen. Aufgrund des Kontaktes zwischen Rad und Untergrund wird Traktion erzeugt und das Fahrzeug beschleunigt oder auch verzögert.

Dieser beschriebene Betriebsfall des Antriebssystems 2 findet während der Bewegung des Fahrzeugs eine Anwendung.

Im zweiten Betriebsfall befindet sich der Traktionsstromrichter 13 in einem Ruhezustand, dass bedeutet, dass keine Wechselspannungen am Leistungsausgang des Traktionsstromrichters 13 erzeugt werden. Das Fahrzeug verharrt sodann im Stillstand. Allerdings wird in diesem Betriebsfall das Drehgebersignal 23 durch das Traktionssteuerungsgerät 15 ausgewertet.

Das Traktionssteuerungsgerät 15 ist durch die Auswertung des Drehgebersignal 23 somit in der Lage eine Drehbewegung des Antriebsrads mit Drehgeber 9 zu detektieren. Dieser beschriebene Betriebsfall des Antriebssystems 2 findet während des Zustands des Stillstands des Fahrzeugs eine Anwendung.

Im ersten Betriebsfall benötigt das Traktionssteuerungsgerät 15 jedoch kein Drehgebersignal 23 zur Reglung/Steuerung der Traktionsstromrichter 13.

Die ausgangsseitigen Wechselgrößen 19 der Traktionsstromrichter 13 werden ausschliesslich anhand der erfassten ausgangsseitigen Wechselgrößen 19 und der Vorgabe einer Geschwindigkeit und/oder Beschleunigung einer übergeordneten nicht dargestellten Fahrzeugsteuerung geregelt/gesteuert.

Hierzu kommen die aus der Literatur bekannten Steuerungs- und Regelungsverfahren für drehgeberlose drehzahlveränderliche Antrieb zum Einsatz.

Alternativ oder zusätzlich kann im zweiten Betriebsfall der Traktionsstromrichter 13 vom Traktionssteuerungsgerät 15 derart gesteuert werden, dass zumindest eine dreiphasige Wechselspannung mit geeigneter Frequenz, Amplitude und Phase generiert wird, wobei diese dreiphasige Wechselspannung ausschliesslich die Traktionsmaschine 17, die dem Antriebsrad ohne Drehgeber 11 zugeordnet ist, versorgt.

Diese Wechselspannung wird derart gesteuert/geregelt, dass diese Traktionsmaschine 17 kein Drehmoment erzeugt und das Fahrzeug sodann im Stillstand verharrt.

Da das Antriebsrad ohne Drehgeber 11 mit der Traktionsmaschine 17 mechanisch gekoppelt ist, verändert sich die Lage des Rotors (nicht dargestellt) dieser Traktionsmaschine 17 bei einer Drehbewegung des Antriebsrads ohne Drehgeber 11.

Die Lageveränderung des Rotors geht mit einer Veränderung der elektrischen Parameter, wie beispielsweise eine Veränderung eines Blindwiderstands der Traktionsmaschine 17, die dem Antriebsrad ohne Drehgeber 11 zugeordnet ist, einher.

Der Einsatz anderer aus der Literatur bekannter Verfahren sind für diesen Zweck sind möglich.

Die Veränderung des Blindwiderstands hat folglich eine Veränderung in den ausgangsseitigen Wechselgrößen 19 des Traktionsstromrichters 13 zur Folge und dies kann vom Traktionssteuerungsgerät 15 anhand der Auswertung der ausgangsseitigen Wechselgrö-βen 19 erfasst und auf eine Drehbewegung geschlossen werden.

Der Einsatz anderer aus der Literatur bekannter Verfahren sind für diesen Zweck sind möglich.

Auch dieser alternative oder zusätzliche Betriebsfall des Antriebssystems 2 findet im Zustand des Stillstands des Fahrzeugs eine Anwendung.

In diesem alternativen oder zusätzlichen Betriebsfall benötigt das Traktionssteuerungsgerät 15 kein Drehgebersignal 23 zur Reglung/Steuerung des Traktionsstromrichters 13. Die ausgangsseitigen Wechselgrößen 19 des Traktionsstromrichters 13 werden ausschliesslich anhand der vom Traktionssteuerungsgerät 15 erfassten ausgangsseitigen Wechselgrößen 19 (der Traktionsmaschiene17, die dem Antriebsrad ohne Drehgeber 11 zugeordnet ist) geregelt/gesteuert.

Hierzu kommen die aus der Literatur bekannten Steuerungs- und Regelungsverfahren für drehgeberlose drehzahlveränderliche Antrieb zum Einsatz.

Nachfolgend wird ein Fahrzeug, insbesondere ein Schienenfahrzeugverbund 3, beschrieben, welches ein Antriebssystem 2 aus den vorangegangenen Ausführungsbeispielen aufweist.

Die Erfindung ist besonders vorteilhaft bei Fahrzeugen mit einer Mehrzahl von Antrieben, beziehungsweise angetriebenen Rädern.

Hier lässt sich zum einen der Energieverbrauch des Antriebsystems während des Stillstands des Fahrzeugs weitestgehend reduzieren, ohne dabei die Sicherheit des Fahrzeugs zu verschlechtern.

Figur 5 zeigt eine schematische Darstellung mehrere Schienenfahrzeuge 1, wobei die einzelnen Fahrzeuge zu einem Schienenfahrzeugverbund 3 zusammengeschlossen sind. Jedes der beiden Schienenfahrzeuge 1 weist ein Antriebssystem zur Erzeugung von Traktion auf.

Bei Schienenfahrzeugen 1 ist es üblich zwei Einzelräder über eine Welle miteinander kraftschlüssig zu verbinden, um einen Radsatz auszubilden.

Auch ist bekannt Schienenfahrzeuge 1 mit Einzelrädern, die sowohl angetrieben wie auch nicht angetrieben sein können, auszubilden.

Deshalb wird im Folgenden Rad oder Räder auch als Synonym für Radsatz verwendet, wobei das Rad als Antriebsrad oder einem nicht angetriebenen Rad ausgebildet sein kann.

Das erste Schienenfahrzeug 1 (von links nach rechts) weist ein erstes Antriebssystem auf, wobei das Antriebssystem ein Antriebsrad mit Drehgeber 9, ein Antriebsrad ohne Drehgeber 11, zwei Traktionsstromrichter 13 und ein Traktionssteuerungsgerät 15 umfasst.

Ferner weist das Schienenfahrzeug 1 zwei antriebslose Räder ohne Drehgeber 5 auf. Das Antriebsrad mit Drehgeber 9, wie auch das Antriebsrad ohne Drehgeber 11, ist jeweils mechanisch mit einer nicht dargestellten Traktionsmaschine verbunden.

Die einzelnen Traktionsmaschinen sind jeweils elektrisch mit einem der beiden Traktionsstromrichter 13 verbunden, sodass die beiden Traktionsmaschinen unabhängig voneinander mit elektrischer Energie versorgt werden können.

Die Traktionsstromrichter 13, insbesondere deren Betrieb, wird durch das Traktionssteuerungsgerät 15 geregelt und/oder gesteuert.

Das Traktionssteuerungsgerät 15 erhält von einer übergeordneten, nicht dargestellten Fahrzeugsteuerung für den jeweiligen Betriebszustand des Schienenfahrzeugs 1 relevante Informationen.

Dies kann beispielsweise eine Vorgabe der Geschwindigkeit und/oder Beschleunigung sein, wobei das Steuerungsgerät 15 die Vorgabe der übergeordneten Fahrzeugsteuerung in entsprechende Steuerungssignale für die Traktionsstromrichter 13 umsetzt, um die Traktionsmaschienen mit elektrischer Energie zu versorgen.

Insbesondere werden beide Traktionsmaschienen während der Bewegung des Schienenfahrzeugs 1 mit elektrischer Energie versorgt um das Schienenfahrzeug 1 anzutreiben. Das Steuerungsgerät 15 steuert und/oder regelt hierbei unter anderem die Drehzahl der Traktionsmaschienen, wobei die Steuerung/Regelung der Drehzahl ausschließlich anhand der ausgangsseitigen Wechselgrößen der beiden Traktionsstromrichter 13 erfolgt. Dies bedeutet, dass der Drehgeber des Antriebsrads mit Drehgeber 9 während der Bewegung des Schienenfahrzeugs 1 nicht ausgewertet wird.

Hingegen wird während des Zustands des Stillstands des Schienenfahrzeugs 1 der Drehgeber des Antriebsrads mit Drehgeber 9 vom Steuerungsgerät 15 ausgewertet, um eine Drehbewegung des Antriebsrads mit Drehgeber 9 zu detektieren, wobei hierbei auf eine Bewegung, insbesondere auf ein Rollen des Schienenfahrzeugs 1 zurückgeschlossen werden kann.

Die Traktionsmaschienen der beiden Antriebsräder werden während des Zustands des Stillstands des Schienenfahrzeugs vorzugsweise nicht mit elektrischer Energie versorgt und die Detektion einer Bewegung wird ausschliesslich mit Hilfe des Drehgebers des Antriebsrads mit Drehgeber 9 erfasst.

Zusätzlich oder alternativ kann die Traktionsmaschine des Antriebsrads mit Drehgeber 9 während des Zustands des Stillstands mit elektrischer Energie versorgt werden, allerdings ohne hierbei ein Drehmoment und somit Traktion zu erzeugen.

Das Steuerungsgerät 15 steuert/regelt den Traktionsstromrichter 13 und wertet die ausgangsseitigen Wechselgrößen des Traktionsstromrichters 13 aus. Anhand einer Veränderung in den ausgangsseitigen Wechselgrößen des Traktionsstromrichters 13 kann eine Drehbewegung des Antriebsrads mit Drehgeber 9 detektiert werden.

Zusätzlich oder alternativ kann die Traktionsmaschine des Antriebsrads ohne Drehgeber 11 im Zustand des Stillstands des Schienenfahrzeugs 1 mit elektrischer Energie versorgt werden, um eine Drehbewegung des Antriebsrads ohne Drehgeber 11 zu detektiert. Hierbei versorgt der zweite Traktionsstromrichter 13 die Traktionsmaschine des Antriebsrads ohne Drehgeber 11 im Zustand des Stillstands des Schienenfahrzeugs 1 mit elektrischer Energie, wobei die Traktionsmaschine auch hierbei kein Drehmoment erzeugt und das Fahrzeug sodann im Stillstand verharrt.

Das Steuerungsgerät 15 steuert/regelt den zugehörigen Traktionsstromrichter 13 und wertet die ausgangsseitigen Wechselgrößen des Traktionsstromrichters 13 aus, um eine Drehbewegung des Antriebsrads ohne Drehgeber 11 zu detektiert.

In jedem der vorangegangenen Beispiele kann das Steuerungsgerät 15 eine Drehbewegung zumindest eines Antriebsrads des Schienenfahrzeugs 1 detektieren. Falls eine Drehbewegung während des Zustands des Stillstands detektiert wird, meldet das Steuerungsgerät 15 diese Bewegung der übergeordneten nicht dargestellten Fahrzeugsteuerung.

Die übergeordnete Fahrzeugsteuerung kann entsprechende Gegenmassnahmen ergreifen, um das Rollen des Schienenfahrzeugs 1 zu verhindern.

Beispielsweise kann die übergeordnete Fahrzeugsteuerung nicht dargestellte Bremssteuerungsgeräte veranlassen die Bremskraft zu erhöhen.

Das zweite Schienenfahrzeug 1 (von links nach rechts) weist ein weiteres Antriebssystem auf, wobei das Antriebssystem zwei Antriebsräder ohne Drehgeber 11, einen Traktionsstromrichter 13 und ein Traktionssteuerungsgeräts 15 umfasst.

Ferner weist das zweite Schienenfahrzeug 1 zwei antriebslose Räder auf, wobei eines als antriebsloses Rad ohne Drehgeber 5 und eines als antriebsloses Rad mit Drehgeber 7 ausgeführt ist.

Die beiden Antriebsräder ohne Drehgeber 11 sind jeweils mechanisch mit einer nicht dargestellten Traktionsmaschine verbunden.

Die einzelnen Traktionsmaschinen sind jeweils elektrisch dem Traktionsstromrichter 13 verbunden, sodass die beiden Traktionsmaschinen gemeinsam mit elektrischer Energie versorgt werden können.

Der Traktionsstromrichter 13, insbesondere dessen Betrieb, wird durch das Traktionssteuerungsgerät 15 geregelt und/oder gesteuert.

Das Traktionssteuerungsgerät 15 erhält von einer übergeordneten, nicht dargestellten Fahrzeugsteuerung für den jeweiligen Betriebszustand des Schienenfahrzeugs 1 relevante Informationen.

Beide Traktionsmaschienen werden während der Bewegung des Schienenfahrzeugs 1 mit elektrischer Energie versorgt um das Schienenfahrzeug 1 anzutreiben.

Das Steuerungsgerät 15 steuert und/oder regelt hierbei unter anderem die Drehzahl der Traktionsmaschienen, wobei die Steuerung/Regelung der Drehzahl ausschließlich anhand der ausgangsseitigen Wechselgrößen des Traktionsstromrichters 13 erfolgt.

Dies bedeutet, dass der Drehgeber des antriebslosen Rades mit Drehgeber 7 während der Bewegung des Schienenfahrzeugs 1 nicht ausgewertet wird.

Hingegen wird während des Zustands des Stillstands des Schienenfahrzeugs 1 der Drehgeber des antriebslosen Rades mit Drehgeber 7 vom Steuerungsgerät 15 ausgewertet, um eine Drehbewegung des antriebslosen Rades mit Drehgeber 7 zu detektieren, wobei hierbei auf eine Bewegung, insbesondere auf ein Rollen des Schienenfahrzeugs 1, zurückgeschlossen werden kann.

Die Traktionsmaschienen der beiden Antriebsräder werden während des Zustands des Stillstands des Schienenfahrzeugs vorzugsweise nicht mit elektrischer Energie versorgt und die Detektion einer Bewegung wird ausschliesslich mit Hilfe des Drehgebers des antriebslosen Rades mit Drehgeber 7 erfasst.

Zusätzlich oder alternativ können die Traktionsmaschinen der Antriebsräder ohne Drehgeber 11 während des Zustands des Stillstands mit elektrischer Energie versorgt werden, allerdings ohne hierbei ein Drehmoment und somit Traktion zu erzeugen.

Das Steuerungsgerät 15 steuert/regelt den Traktionsstromrichter 13 und wertet die ausgangsseitigen Wechselgrößen des Traktionsstromrichters 13 aus. Anhand einer Veränderung in den Wechselgrößen der ausgangsseitigen Wechselgrößen des Traktionsstromrichters 13 kann eine Drehbewegung der Antriebsräder ohne Drehgeber 11 detektiert werden.

In jedem der vorangegangenen Beispiele kann das Steuerungsgerät 15 eine Drehbewegung zumindest eines Antriebsrads oder eines nicht angetriebenen Rades des Schienenfahrzeugs 1 detektieren. Falls eine Drehbewegung während des Zustands des Stillstands detektiert wird, meldet das Steuerungsgerät 15 diese Bewegung der übergeordneten Fahrzeugsteuerung.

Die übergeordnete Fahrzeugsteuerung kann entsprechende Gegenmassnahmen vornehmen, um das Rollen des Schienenfahrzeugs 1 zu verhindern.

Beispielsweise kann die übergeordnete Fahrzeugsteuerung nicht dargestellte Bremssteuerungsgeräte veranlassen die Bremskraft zu erhöhen.

Die übergeordnete Fahrzeugsteuerung kann sich in einem der Schienenfahrzeuge 1 befinden.

Auch ist es möglich, dass jedes der beiden Schienenfahrzeuge 1 eine eigene übergeordnete Fahrzeugsteuerung aufweist.

Wie Figur 5 entnommen werden kann, ist jedes der beiden Schienenfahrzeuge 1 mit einem Drehgeber ausgestaltet.

Ein Drehgeber in jedem Schienenfahrzeug ist ausreichend um den Stillstand zuverlässig zu detektieren.

Da es sich um einen Schienenfahrzeugverband 3 handelt, wäre es sogar ausreichend nur einen Drehgeber in dem gesamten Schienenfahrzeugverband auszuwerten, da die beiden Schienenfahrzeuge 1 kraftschlüssig miteinander verbunden sind.

Allerdings würde sich dies negativ auf die Zuverlässigkeit der Stillstandserkennung auswirken, da auf eine Redundanz verzichtet wird.

Sind die Schienenfahrzeuge 1 des Schienenfahrzeugverbands 3 vollständig Drehgeberlos ausgebildet, werden aus Gründen der Energieeffizienz höchstens zwei Traktionsmaschinen der insgesamt vier Traktionsmaschienen während des Zustands des Stillstands mit elektrischer Energie versorgt, um den Stillstand des Fahrzeugs zuverlässig zu detektieren.

Vorzugsweise wird jedoch höchstens eine Traktionsmaschine (des gesamten Schienenfahrzeugverbands 3) mit elektrischer Energie versorgt. Dies reduziert den Energieverbrauch des Schienenfahrzeugverbands 3 auf ein Minimum.

Allerdings würde sich dies negativ auf die Zuverlässigkeit der Stillstandserkennung auswirken, da auf eine Redundanz verzichtet wird.

Auch kann ein Schienenfahrzeug 1 mehr als zwei Antriebsräder und somit mehr als zwei Traktionsmaschienen aufweisen.

Auch dann werden während des Zustands des Stillstands maximal zwei Traktionsmaschienen mit elektrischer Energie versorgt, um den Stillstand des Schienenfahrzeugs 1 zuverlässig zu detektieren.

Vorzugsweise wird jedoch nur eine Traktionsmaschiene mit elektrischer Energie versorgt um den Stillstand des Schienenfahrzeugs 1 zu detektieren.

### Bezugszeichenliste

- 1: Schienenfahrzeug
- 2: Antriebssystem
- 3: Schienenfahrzeugverbund
- 5: Antriebloses Rad ohne Drehgeber
- 7: Antriebloses Rad mit Drehgeber
- 9: Antriebsrad mit Drehgeber
- 10: Drehgeber
- 11: Antriebsrad ohne Drehgeber
- 13: Traktionsstromrichter
- 15: Traktionssteuerungsgerät
- 17: Traktionsmaschine
- 18: Antriebswelle
- 19: Ausgangsseitige Wechselgrößen
- 21: Ansteuersignale
- 23: Drehgebersignale

## Patentansprüche

1. Antriebssystem (2) für ein Fahrzeug, insbesondere für ein Schienenfahrzeug (1), umfassend:
- eine Mehrzahl von elektrischen Traktionsmaschinen (17), wobei die einzelnen elektrischen Traktionsmaschinen (17) jeweils mechanisch mit zumindest einem Antriebsrad (9; 11) gekoppelt sind, um Traktion zu erzeugen
- zumindest einen Traktionsstromrichter (13), wobei der Traktionsstromrichter (13) wechselspannungsseitig mit zumindest einer elektrischen Traktionsmaschine (17) verbunden ist, um die zumindest eine elektrische Traktionsmaschine (17) mit elektrischer Energie zu versorgen
- eine Traktionssteuerungseinrichtung (15), zur Regelung und/oder Steuerung zumindest eines Traktionsstromrichters (13), wobei die Traktionssteuerungseinrichtung (15) ausgebildet ist, den zumindest einen Traktionsstromrichter (13) während der Bewegung des Fahrzeugs, anhand von elektrischen Ausgangswechselgrößen (19) des zumindest einen Traktionsstromrichters (13) zu regeln und/oder zu steuern,
- eine zusätzlich zu der Traktionssteuerungseinrichtung (15) vorhandene Erfassungseinrichtung (10), die ausgestaltet ist, eine Drehbewegung eines sich während der Fahrt des Fahrzeugs drehenden Rades (5, 9; 7, 11) des Fahrzeugs zu erfassen, wobei ein Signaleingang der Traktionssteuerungseinrichtung (15) mit der Erfassungseinrichtung (10) verbunden ist,
wobei
die Traktionssteuerungseinrichtung (15) ferner derart ausgebildet ist, während einer Fahrt des Fahrzeugs eine Drehbewegung zumindest eines Antriebsrades (9; 11) des Fahrzeugs zu detektieren, wobei die Traktionssteuerungseinrichtung (15) hierbei eine Drehbewegung:
- ohne ein von der Erfassungseinrichtung (10) bereitgestelltes Signal auszuwerten, anhand einer Veränderung in den elektrischen Ausgangswechselgrößen (19) des zumindest einen Traktionsstromrichters (13) detektiert und/oder anhand von zumindest einer Größe detektiert, die von einem elektrischen und/oder magnetischen Zustand der elektrischen Traktionsmaschine (17) oder zumindest einer der elektrischen Traktionsmaschinen (17) abhängt, wobei der Zustand von einer Bewegung und/oder Position eines Läufers der elektrischen Traktionsmaschine (17) abhängig ist, und
die Traktionssteuerungseinrichtung (15) ferner derart ausgebildet ist, während eines Zustands, in dem der Stillstand des Fahrzeugs erwartet und/oder gewünscht ist, eine Drehbewegung des sich während der Fahrt des Fahrzeugs drehenden Rades (5, 9; 7, 11) des Fahrzeugs durch Auswertung von von der Erfassungseinrichtung (10) bereitgestellten und über den Signaleingang empfangenen Signalen zu erfassen.

2. Antriebssystem (2) nach Anspruch 1, **dadurch gekennzeichnet, dass** die Traktionssteuerungseinrichtung (15) ferner ausgebildet ist, den zumindest einen Traktionsstromrichter (13) während des Stillstands des Fahrzeugs derart zu regeln, dass mindestens eine, höchstens jedoch zwei der Mehrzahl der elektrischen Traktionsmaschinen (17) mit elektrischer Energie versorgt werden.

3. Antriebssystem (2) nach Anspruch 1, **dadurch gekennzeichnet, dass** die Traktionssteuerungseinrichtung (15) ferner ausgebildet ist, den zumindest einen Traktionsstromrichter (13) während des Stillstands des Fahrzeugs derart zu regeln, dass höchstens eine der Mehrzahl der elektrischen Traktionsmaschinen (17) mit elektrischer Energie versorgt wird.

4. Antriebssystem (2) nach einem der vorangegangenen Ansprüche, **dadurch gekennzeichnet, dass** die Traktionssteuerungseinrichtung (15) ausgebildet ist, Signale der Erfassungseinrichtung (10) während der Fahrt des Fahrzeugs nicht zur Regelung und/oder Steuerung zumindest eines Traktionsstromrichters (13) zu verwenden.

5. Antriebssystem (2) nach einem der vorangegangenen Ansprüche, **dadurch gekennzeichnet, dass** die Erfassungseinrichtung (10) ein Drehgeber, ein Beschleunigungssensor, ein Resolver oder ein Schwerkraftsensor ist.

6. Verfahren zum Betreiben des Antriebssystems (2) nach einem der Ansprüche 1 bis 5, wobei das Verfahren in einem ersten Betriebsmodus umfasst:
- Versorgen der elektrischen Traktionsmaschine oder der Mehrzahl der elektrischen Traktionsmaschinen (17) mit elektrischer Energie, um Traktion zu erzeugen, wobei die Drehzahl, die Geschwindigkeit, das Drehmoment und/oder die Lage des Rotors der elektrischen Traktionsmaschine (17) oder zumindest einer der elektrischen Traktionsmaschinen während der Bewegung des Fahrzeugs von einer Traktionssteuerungseinrichtung (15) anhand von
- elektrischen Ausgangswechselgrößen (19) des zumindest einen Traktionsstromrichters (17), geregelt und/oder gesteuert wird, und/oder
- zumindest einer Größe geregelt und/oder gesteuert wird, die von einem elektrischen und/oder magnetischen Zustand der elektrischen Traktionsmaschine oder zumindest einer der elektrischen Traktionsmaschinen beeinflusst wird, wobei der Zustand von einer Bewegung und/oder Position eines Läufers der elektrischen Traktionsmaschine(n) abhängig ist,
wobei eine Drehbewegung zumindest eines Antriebsrades (9; 11) des Fahrzeugs in dem ersten Betriebsmodus ohne eine zusätzlich zu der Traktionssteuerungseinrichtung (15) vorhandene Erfassungseinrichtung (10) erfasst wird, die ausgestaltet ist, eine Drehbewegung eines sich während der Fahrt des Fahrzeugs drehenden Rades (5, 9; 7, 11) des Fahrzeugs zu erfassen,
wobei das Verfahren in einem zumindest zweiten Betriebsmodus, während eines Zustands, in dem der Stillstand des Fahrzeugs erwartet und/oder erwünscht ist, eine Drehbewegung des sich während der Fahrt des Fahrzeugs drehenden Rades (5, 9; 7, 11) des Fahrzeugs durch Auswertung von von der Erfassungseinrichtung (10) bereitgestellten und empfangenen Signalen erfasst.

7. Verfahren nach Anspruch 6, **dadurch gekennzeichnet, dass** höchstens zwei der Mehrzahl von elektrischen Traktionsmaschinen (17) mit elektrischer Energie versorgt werden, ohne dabei Traktion zu erzeugen.

8. Verfahren nach Anspruch 6, **dadurch gekennzeichnet, dass** höchstens eine der Mehrzahl von elektrischen Traktionsmaschinen (17) mit elektrischer Energie versorgt wird, ohne dabei Traktion zu erzeugen.

9. Verfahren nach einem der Ansprüche 6 bis 8, **dadurch gekennzeichnet, dass** die Erfassungseinrichtung (10) ein Drehgeber, ein Beschleunigungssensor, ein Resolver oder ein Schwerkraftsensor ist.

10. Fahrzeug, insbesondere Schienenfahrzeug (1), mit dem Antriebssystem (2) nach einem der Ansprüche 1 bis 5, wobei das Antriebssystem (2) insbesondere mit dem Verfahren nach einem der Ansprüche 6 bis 9 betrieben wird.

## Claims

1. Drive system (2) for a vehicle, in particular for a rail vehicle (1), comprising:
- a plurality of electric traction machines (17), the individual electric traction machines (17) each being mechanically coupled to at least one drive wheel (9; 11) to generate traction
- at least one traction converter (13), wherein the traction power converter (13) being connected on the AC side to at least one electric traction machine (17) to supply the at least one electric traction machine (17) with electric energy
- a traction control device (15) for regulating and/or controlling at least one traction converter (13), the traction control device (15) being designed to regulate and/or control the at least one traction converter (13) during the movement of the vehicle, on the basis of electrical output alternating variables (19) of the at least one traction converter (13),
- a detection device (10) which is provided in addition to the traction control device (15) and which is designed to detect a rotational movement of a wheel (5, 9; 7, 11) rotating during the travel of the vehicle, wherein a signal input of the traction control device (15) is connected to the detection device (10),
wherein
the traction control device (15) is further designed to detect during a travel of the vehicle a rotational movement of at least one drive wheel (9; 11) of the vehicle, the traction control device (15) thereby detecting a rotational movement:
- without evaluating a signal provided by the detection device (10), on the basis of a change in the electrical output alternating variables (19) of the at least one traction converter (13) and/or by means of at least one variable which is dependent on an electrical and/or magnetic state of the electric traction machine (17) or of at least one of the electric traction machines (17), the state being dependent on a movement and/or position of a rotor of the electric traction machine (17), and
the traction control device (15) is further adapted to control during of a state in which the standstill of the vehicle is expected and/or desired, a rotational movement of the wheel (5, 9; 7, 11) of the vehicle, which wheel is rotating during the travel of the vehicle, by evaluation of signals provided by the detection device (10) and received via the signal input.

2. Drive system (2) according to claim 1, **characterized in that** the traction control device (15) is further designed to control the at least one traction converter (13) during the standstill of the vehicle in such a way that at least one, but at most two, of the plurality of electric traction machines (17) are supplied with electrical energy.

3. Drive system (2) according to claim 1, **characterized in that** the traction control device (15) is further designed to regulate the at least one traction converter (13) during the standstill of the vehicle in such a way that at most one of the plurality of electric traction machines (17) is supplied with electric energy.

4. Drive system (2) according to one of the preceding claims, **characterized in that** the traction control device (15) is adapted to use signals of the detection device (10) during the travel of the vehicle not for regulating and/or controlling at least one traction converter (13).

5. Drive system (2) according to one of the preceding claims, **characterized in that** the detection device (10) is a rotary encoder, an acceleration sensor, a resolver or a gravity sensor.

6. A method of operating the drive system (2) according to any one of claims 1 to 5, the method comprising, in a first mode of operation:
- Providing electrical energy to the electric traction machine or the plurality of electric traction machines (17) to provide traction, wherein the rotational speed, the velocity, the torque and/or the position of the rotor of the electric traction machine or of at least one of the plurality of electric traction machines (17) during the movement of the vehicle by a traction control device (15)
- is regulated and/or controlled on the basis of electrical output alternating variables (19) of the at least one traction converter (17), and/or by at least one of the electric traction machines (17), and/or
- is regulated and/or controlled on the basis of at least one variable influenced by an electric and/or magnetic state of the electric traction machine or of at least one of the electric traction machines, the state being dependent on a movement and/or position of a rotor of the electric traction machine(s),
wherein a rotational movement of at least one drive wheel (9; 11) of the vehicle in the first operating mode is detected without a detection device (10) that is present in addition to the traction control device (15), which detection device (10) is designed to detect a rotational movement of a wheel (5, 9; 7, 11) of the vehicle rotating during the travel of the vehicle,
wherein the method, in an at least second operating mode, during a state in which the standstill of the vehicle is expected and/or desired, detects a rotational movement of the wheel (5, 9; 7, 11) of the vehicle rotating during the travel of the vehicle by evaluating signals provided and received by the detection device (10).

7. Method according to claim 6, **characterized in that** at most two of the plurality of electric traction machines (17) are supplied with electric energy, without thereby generating traction.

8. Method according to claim 6, **characterized in that** at most one of the plurality of electric traction machines (17) is supplied with electric energy, without thereby generating traction.

9. Method according to any one of claims 6 to 8, **characterized in that** the sensing device (10) is a rotary encoder, an acceleration sensor, a resolver or a gravity sensor.

10. Vehicle, in particular rail vehicle (1), with the drive system (2) according to one of claims 1 to 5, wherein the drive system (2) is in particular operated according to the method according to any one of claims 6 to 9.

## Revendications

1. Système d'entraînement (2) pour un véhicule, en particulier pour un véhicule ferroviaire (1), comprenant :
- une pluralité de machines de traction électriques (17), chaque machine de traction électrique (17) étant couplée respectivement mécaniquement à au moins une roue motrice (9 ; 11) pour générer une traction
- au moins un convertisseur de courant de traction (13), où le convertisseur de courant de traction (13) est lié du côté de la tension alternative à au moins une machine de traction électrique (17) pour alimenter l'au moins une machine de traction électrique (17) en énergie électrique
- un dispositif de commande de traction (15) pour réguler et/ou commander au moins un convertisseur de courant de traction (13), où le dispositif de commande de traction (15) est conçu pour réguler et/ou commander l'au moins un convertisseur de courant de traction (13) pendant le déplacement du véhicule au moyen de valeurs électriques initiales (19) de l'au moins un convertisseur de courant de traction (13),
- un capteur (10) présent en plus du dispositif de commande de traction (15), conçu pour détecter un mouvement rotatif d'une roue en rotation pendant le déplacement du véhicule (5, 9 ; 7, 11), où une entrée de signal du dispositif de commande de traction (15) est liée au capteur (10),
dans lequel le dispositif de commande de traction (15) est, en outre, conçu pour détecter, pendant un déplacement du véhicule, un mouvement de rotation d'au moins une roue motrice (9 ; 11) du véhicule, où, dans la présente, le dispositif de commande de traction (15) :
- détecte un mouvement de rotation sans évaluer un signal préparé par le capteur (10) sur la base d'une modification dans les variables de sortie électrique (19) de l'au moins un convertisseur de courant de traction (13) et/ou sur la base d'au moins une valeur dépendant d'un état électrique et/ou magnétique de la machine de traction électrique (17) ou d'au moins une des machines de traction électrique (17), où l'état dépend d'un mouvement et/ou d'une position d'un patin de la machine de traction électrique (17), et
le dispositif de commande de traction (15) est, en outre, conçu de façon à détecter, pendant un état dans lequel on s'attend et/ou on désire l'arrêt du véhicule, un mouvement de rotation de la roue (5, 9 ; 7, 11) du véhicule en rotation pendant le déplacement du véhicule par évaluation de signaux préparés par le capteur (10) et reçus via l'entrée de signal.

2. Système d'entraînement (2) selon la revendication 1, **caractérisé en ce que** le dispositif de commande de traction (15) est conçu, en outre, pour réguler l'au moins un convertisseur de courant de traction (13) pendant l'arrêt du véhicule de façon qu'au moins une, mais au maximum deux parmi la pluralité des machines de traction électrique (17) soient alimentées en énergie électrique.

3. Système d'entraînement (2) selon la revendication 1, **caractérisé en ce que** le dispositif de commande de traction (15) est conçu, en outre, pour réguler l'au moins un convertisseur de courant de traction (13) pendant l'arrêt du véhicule de façon qu'au plus une parmi la pluralité des machines de traction électrique (17) soit alimentée en énergie électrique.

4. Système d'entraînement (2) selon l'une des revendications précédentes, **caractérisé en ce que** le dispositif de commande de traction (15) est conçu pour utiliser certains signaux du capteur (10) pendant le déplacement du véhicule autrement que pour réguler et/ou commander au moins un convertisseur de courant de traction (13).

5. Système d'entraînement (2) selon l'une des revendications précédentes, **caractérisé en ce que** le capteur (10) est un capteur rotatif, un accéléromètre, un résolveur ou un capteur de gravité.

6. Procédé d'activation du système d'entraînement (2) selon l'une des revendications 1 à 5, dans lequel le procédé comprend dans un premier mode de fonctionnement :
- une alimentation de la machine de traction électrique ou de la pluralité de machines de traction électrique (17) par de l'énergie électrique pour générer de la traction, au cours de laquelle la vitesse de rotation, la vitesse, le moment de rotation et/ou la position du rotor de la machine de traction électrique (17) ou d'au moins l'une des machines de traction électrique est régulée et/ou commandée pendant le déplacement du véhicule par un dispositif de commande de traction (15) sur la base
- de valeurs électriques initiales (19) de l'au moins une machine de traction électrique (17), et/ou
- est régulée et/ou commandée sur la base d'une valeur qui est influencée par un état électrique et/ou magnétique de la machine de traction électrique ou d'au moins l'une des machines de traction électrique, où l'état dépend d'un mouvement et/ou d'une position d'un patin de la ou des machines de traction électrique,
où, dans un premier mode de fonctionnement, un mouvement rotatif d'une roue motrice (9 ; 11) du véhicule est détecté sans la présence, en plus du dispositif de commande de traction (15), d'un capteur (10) équipé pour détecter un mouvement de rotation d'une roue (5, 9 ; 7, 11) du véhicule en rotation pendant le déplacement du véhicule,
étant donné que le procédé, dans au moins un deuxième mode de fonctionnement pendant un état dans lequel on s'attend et/ou on désire l'arrêt du véhicule, détecte un mouvement de rotation de la roue (5, 9 ; 7, 11) du véhicule en rotation pendant le déplacement du véhicule par évaluation de signaux préparés et reçus par le capteur (10).

7. Procédé selon la revendication 6, **caractérisé en ce que** maximum deux parmi la pluralité de machines à traction électrique (17) sont alimentées par de l'énergie électrique sans générer de traction.

8. Procédé selon la revendication 6, **caractérisé en ce que** maximum une parmi la pluralité de machines à traction électrique (17) est alimentée par de l'énergie électrique sans générer de traction.

9. Procédé selon l'une des revendications 6 à 8, **caractérisé en ce que** le capteur (10) est un capteur rotatif, un accéléromètre, un résolveur ou un capteur de gravité.

10. Véhicule, en particulier véhicule ferroviaire, (1), avec le système d'entraînement (2) selon l'une des revendications 1 à 5, dans lequel le système d'entraînement (2) est mu en particulier par le procédé selon l'une des revendications 6 à 9.
